# EUROPEAN PATENT SPECIFICATION

(11) **EP 4 491 262 B1**
(45) Date of publication and mention of the grant of the patent: **11.02.2026**
(21) Application number: 22768931.2
(22) Date of filing: 05.07.2022
(51) Int. Cl.: B01F 23/234, F15D 1/00

(54) **TURBULENT FLOW PROMOTING SURFACE AND METHOD, AND USE OF SAID SURFACE IN FLUID AERATION**
TURBULENTE STRÖMUNG FÖRDERNDE OBERFLÄCHE UND VERFAHREN UND VERWENDUNG DER OBERFLÄCHE BEI DER FLUIDBELÜFTUNG
SURFACE PROMOTRICE DE FLUX TURBULENT ET PROCÉDÉ, ET UTILISATION DE LADITE SURFACE DANS L'AÉRATION DE LIQUIDES

(30) Priority: 10.03.2022 PT 2022117851
(43) Date of publication of application: 15.01.2025
(73) Proprietor: Cardoso Prata Dos Santos, Pedro Miguel, 1070-192 Lisboa (PT)
(72) Inventor: Cardoso Prata Dos Santos, Pedro Miguel, 1070-192 Lisboa (PT)
(74) Representative: Moniz Pereira, Manuel
(86) International application number: PCT/IB2022/056214
(87) International publication number: WO 2023/170460

(56) References cited:
- WO-A1-02/064422
- DE-A1- 102011 079 903
- DE-A1- 3 341 336
- US-B1- 9 314 748

## Description

### Field of the invention

The present invention relates to a surface for use in the aeration of fluids, namely to a surface comprised of bag-like structures that promote the turbulent flow of fluids.

### Scope of the invention

Several industries use processes and systems that require that a fluid present specific parameters, wherein one of the components of said process or system is a fluid aerator, namely of water. Such industries need water to present a safe level of dissolved oxygen (DO) adequate for the growth of aerobic microorganisms. These microorganisms degrade biological matter that can be present in water, being the described aerators preferably used, namely, but not exclusively, in the treatment of wastewaters, in composting of organic products, and in aerating ponds, pools and water reservoirs.

Aquatic locations that present low DO levels inherently present high oxygen demand, which can be chemical (chemical oxygen demand, COD) or biochemical (biochemical oxygen demand, BOD). In these conditions, concentrations of oxidative organic molecules and/or large amounts of aerobic organisms are present in a large excess in water, relative to the existing concentration of dissolved oxygen (Oxygen saturation, SO₂). These conditions allow for the proliferation of anaerobic microorganisms, which further degrade the water quality.

High levels of COD or BOD worsen the quality of life of aerobic species in water. For example, due to the high level of organic molecules that are present in sewage waters, the respective flow of these waters to rivers promotes eutrophication, wherein nutrient excess exponentially raises the amount of microorganisms in water. Such effect exponentially reduces water SO₂ levels, making impossible the growth of aerobic microorganisms. Such makes the prospect of the water being naturally cleansed highly unlikely.

To prevent eutrophication, wastewater treatment plants were developed and installed worldwide, wherein residual waters are treated in such a way that can then be safely released to rivers or seas, with pollution levels considered environmentally acceptable. These plants present at least one water aeration system, which allows for improved oxidation of organic compounds and promotes the growth of aerobic organisms, therefore raising the degradation of biological matter present in wastewaters. As such, less nutrients are released to aquatic habitats, reducing the effect of eutrophication.

Even in aquatic habitats where a large amount of sludge has been released, being therefore devoid of aerobic organisms due to eutrophication, aeration allows new development of aquatic life in these habitats.

In the composting of organic products, aerobic microorganisms consume nutrients, releasing other nutrients adequate for the growth of other microorganisms, and so on, creating a community that presents nutrient richness, making compost suitable for use by higher complexity organisms such as plants. Composting, by such reason, is mainly done for fertilizer production.

### Background of the invention

The state of the art presents several solutions for water aeration.

Document US2016214071 presents one technology initially developed by Anzai Kantetsu KK but applied in wine aeration. The system comprises a pump, a hose attached to the pump by a first nozzle, a gas conduit coupled to a second nozzle of the hose and submerged in wine, having at the tip a porous ceramic composite. Air propelled by the pump passes with a large pressure through the pores of the ceramic composite, releasing a large amount of fine bubbles. Fine bubbles are characterized by having a diameter between 10 µm and 2 mm, also called microbubbles.

Nanobubbles, or ultrafine bubbles, have a diameter in the nanometre scale. Microbubbles are known in the field for exponentially decreasing in size within 5 minutes, becoming nanobubbles. Due to the high amount of bubbles present in the water, the air-water interface increases considerably, increasing, thus the percentage of SO₂ in the water.

The equipment described in document US3970731 produces the same effect than the one referred in the previous document, being however achieved by a porous plate placed at the end of a means for ejecting water, such as a faucet.

The SIO solution from the company Ultrafine Nanobubble Cavitation uses a static mixer that forms nanobubbles by promoting turbulent flow. Water, passing through the interior of this mixer, hits propeller-shaped blades that are located at the inlet of the mixer. By hitting these blades, the water dissipates, forming bubbles. Water, now with bubbles and in turbulent flow, passes through existing blades inside the mixer that divide the water stream into two directions, forming more bubbles, also splitting the bubbles already formed. This way, bubbles become microbubbles, moving on to nanobubbles. At the exit, water stream returns to a laminar flow, but with a large amount of nanobubbles.

Turbulent flow is also known for raising SO₂ values. Turbulent flow happens when a circulating fluid finds an obstacle. When that happens, fluid changes direction, losing momentum and therefore entering turbulent flow. Since the movement of a fluid in turbulent flow is random, the air-water interface grows. Turbulent flow and an increase in the air-water interface together raise the tendency for air bubbles to be generated, making the air-water interface larger.

The equipment described in document CN105036296 achieves this technical effect through a membrane that promotes turbulent flow comprised of spikes that separate water flowing through the membrane, promoting turbulent flow.

Document DE102011079903, which discloses a surface in accordance with the preamble of claim 1, refers to a "Body for supersonic flow channel for e.g. jet engine of vehicle, has overflow surface partially comprising structure, which is designed such that fluid swirl is locatable and inducible within recess of structure".

Document WO02064422A1 refers to an invention that describe formations on the surface of bodies for reducing the drag relative to a medium which the body is located in or close to. The formations comprise a plurality of cavities. The surface in which the cavities are formed is closed. The cavity has a disruption edge adjacent to the cavity, with the disruption edge located upstream of the cavity, so as to set the flowing medium most proximal to the surface into turbulence upon passing the disruption edge.

### Advantages of the invention

The equipment of present invention has the objective of promoting turbulent flow, through a technique similar to the one stated in document CN105036296. The equipment of the present invention comprises a protruding surface comprising protuberances where a fluid to be aerated passes through. Such protuberances further comprise a trench that promotes mixing between air and fluid, and a lateral blockage that obstructs the flow of the fluid in turbulent flow to the outside of the trench, by blocking the lateral openings of the trench.

This synergistic effect allows for greater mixing between fluid and air, by promoting the formation of turbulent flow through the three individual components of the equipment of the present invention, significantly improving the formation of microbubbles and nanobubbles, and, thus, aeration of the fluid.

The equipment of the present invention can also be applied in any state-of-the-art solutions presented above, thereby exponentially improving the performance of such solutions. The equipment of the present invention can also be applied in other solutions that have the objective of fluid aeration and/or turbulent flow generation.

### Brief description of the drawings

These and other features are to be easily understood by the accompanying drawings, which should be taken as examples only and are not to be considered as limiting the scope of the present invention. For illustrative purposes, the measurements of the elements in the drawings may be exaggerated and not drawn to scale. The absolute and relative dimensions do not match actual relations for carrying out the invention.

In a preferred embodiment of the invention:
Figure 1 presents a view of an embodiment of the surface of the equipment of the present invention, wherein promoters are placed in a translational repetition, forming a geometrical pattern, with all components substantially aligned with a substantially perpendicular axis.
Figure 2 presents a frontal superior perspective view of a promoter.

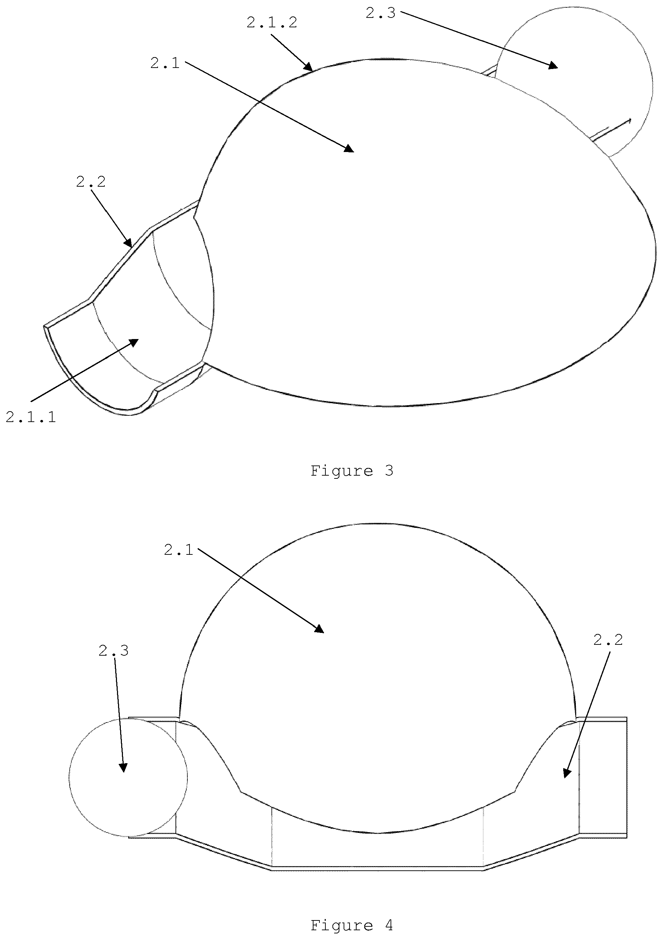

Figure 3 presents a rear superior perspective view of a promoter.
Figure 4 presents a top view of a promoter.
Figure 5 presents a top view of two laterally positioned promoters, revealing the detail of the obstruction present in the trench.
Figure 6 presents a view of an embodiment of the surface of the equipment of the present invention, such that the translational repetition of the promoters forms a geometrical pattern, with all components substantially aligned with a substantially diagonal axis.
Figure 7 presents a view of the surface of the equipment of the present invention placed on a curved surface.
Figure 8 presents fluid stream directed along the surface of the equipment of the present invention.

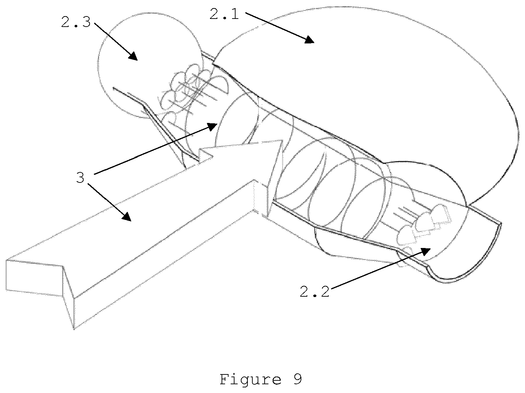

Figure 9 presents the path that the fluid stream follows upon finding a promoter of the surface of the equipment of the present invention.

In the drawings are marked the elements and components of the equipment of the present invention, as well as the elements and components necessary for the proper functioning of the invention:
- 1.: surface
- 2.: promotor
2.1. protuberance
2.1.1. cavity
2.1.2. edge
2.1. 3. central opening
2.2. trench
2.3. blockage element
- 3.: fluid stream

### Detailed description of invention

The shapes "substantially hemispherical", "substantially pyramidal", "substantially parallelepiped", "substantially prismatic", "substantially conic", "substantially frustum shaped", "substantially frustoconical", "substantially halfpipe", and "substantially complementary" are understood to be preferential shapes for embodiments of elements of the invention, which may also work with other shapes.

The positions "substantially horizontal", "substantially vertical", "substantially aligned", "substantially perpendicular", and "substantially diagonal" are understood as possible positions for embodiments of elements of the invention, which may also work with other positions.

By "translational repetition" is meant the successive and indefinite repetition of components of the equipment of the present invention over a two-dimensional plane, wherein a copy of one component of the equipment of the present invention is set over a substantially linear position in relation to the original component, without any rotation or change of any feature or position of the copied component.

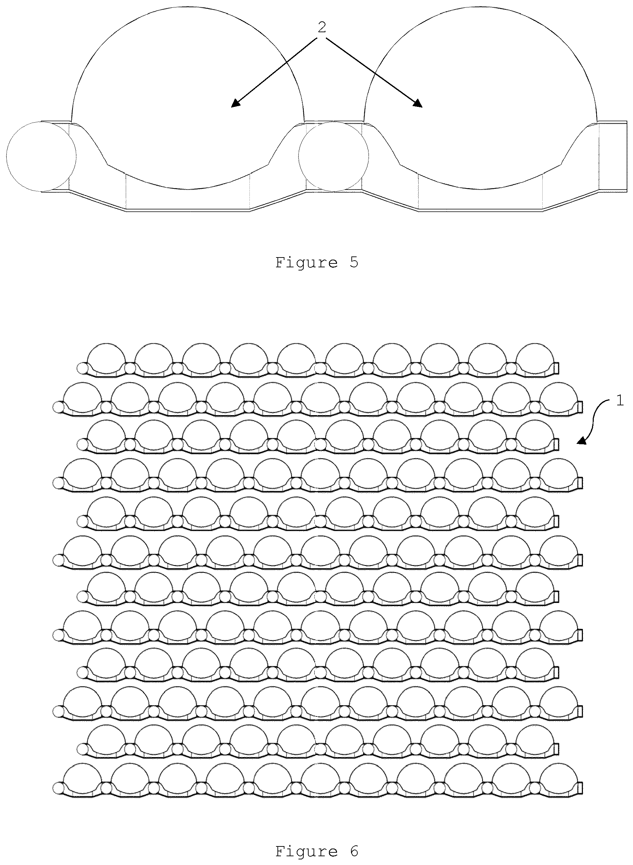

By "laterally positioned", as observable in figure 5, is meant the placement of one element of equipment of the present invention to the right or to the left of another element, such that both elements are in physical contact with each other.

By "geometrical pattern" is meant the two-dimensional plane formed by the ordered placement of elements of the equipment of the present invention.

By "fluid stream" is meant the initial fluid flow that streams along the surface of the equipment of the present invention.

As can be clear to a person skilled in the art, the application of the principles described herein is not limited to the embodiments shown. Possible changes that can occur in the present invention, defined in number, remain within the scope of the present invention.

Turbulent flow promoting surfaces in accordance with the principles described herein can comprise any number of the features described. Similarly, the principles described herein can be applied to any turbulent flow promoting surface.

Similarly, it is clear to a person skilled in the art that due to the nature of the present invention, the equipment of the present invention can be applied to any surface, flat or curved, of any equipment used for aeration or promotion of turbulent flow, namely but not exclusively, in composting fermenters, wastewater treatment plants, drink and soda aerators, marine animal raising systems, aerator shovels, fluid transport equipment, and marine vessels.

According to the drawings, the equipment of the present invention comprises a surface (1) which is applied over a base. The base can be manufactured in any material adequate for use in fluids, namely water, such as, namely, but not exclusively, heavy metals, steel, aluminium, plastic polymers and copolymers, organic polymers and copolymers, glass, carbon fibre, varnished cellulose, cellulose coated with plastic polymers or copolymers, and varnished wood.

In a preferred embodiment, the surface (1) is applied over the base. The surface (1) comprises an undefined translational repetition of turbulent flow promoters (2). In another embodiment, the surface (1) is the base itself.

Each promoter (2) comprises a protuberance (2.1). The protuberance (2.1) presents any shape adequate for the effect, namely but not exclusively, substantially hemispherical, substantially pyramidal, substantially parallelepiped, substantially prismatic, substantially conical, substantially frustum shaped, substantially frustoconical, or substantially halfpipe, preferably substantially hemispherical. The protuberance (2.1) is set on the surface (1) and comprises an inferior cut in a substantially halfpipe shape at the end of the protuberance (2.1) that is in contact with the surface (1). In a position superior to the cut stated above, the protuberance (2.1) presents a second superior cut, substantially circular, the extremity of which contours the wall of the protuberance (2.1) and forms an edge (2.1.2).

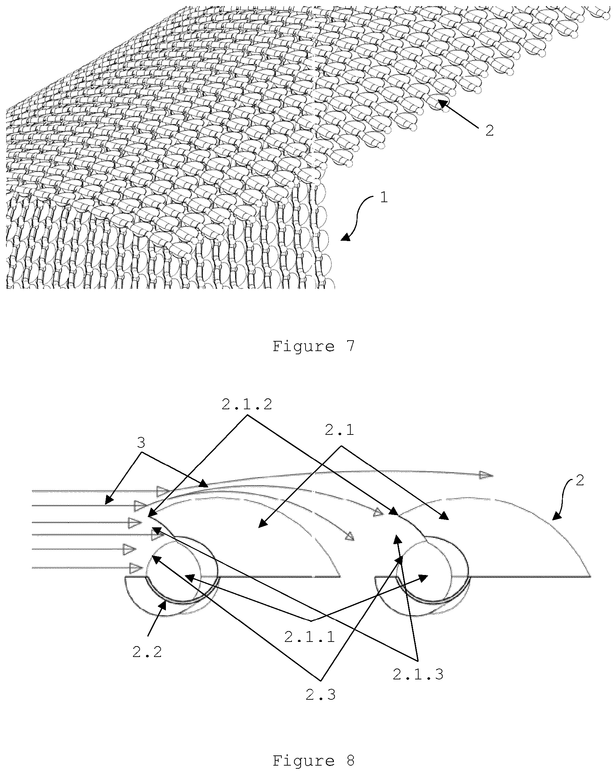

As can be observed in figure 8, the protuberance (2.1) serves as an obstacle to the path of the fluid stream (3), thereby promoting turbulent flow. Fluid hits the protuberance (2.1), thereby losing directional stability, entering turbulent flow, and engulfing the protuberance (2.1) to continue moving in its original direction.

The protuberance (2.1) comprises a trench (2.2), that, in a preferred embodiment, presents a substantially halfpipe shape that is substantially complementary to the shape of the inferior cut of the protuberance (2.1). I.e., the inferior cut done to the protuberance (2.1) with the trench (2.2) forms a cavity (2.1.1) with a substantially cylindrical shape, hollow in its interior. The protuberance (2.1) also presents a central opening (2.1.3) obtained from the circular cut done to the protuberance (2.1), above the inferior cut. The cavity (2.1.1) is located at the contact zone between the protuberance (2.1) and the surface (1), preferably in a substantially perpendicular position in relation to the direction of the fluid stream (3) and in such a way that the stream directly enters the cavity (2.1.1). In another embodiment, the trench (2.2) presents a shape selected from, namely, but not exclusively, substantially parallelepiped, substantially prismatic, substantially conical, substantially frustum shaped, or substantially frustoconical.

The edge (2.1.2) cuts the fluid stream (3) into two streams. One of these streams engulfs the protuberance (2.1) by the upper and lateral sides, continuing in its original direction, while the other stream goes into the cavity (2.1.1) through the central opening (2.1.3).

As can be observed in figure 8, the cavity (2.1.1) receives the circulating fluid, obstructing its flow. The curved, half-closed shape of the protuberance (2.1) forces the fluid into entering the cavity (2.1.1) through the central opening (2.1.3). The cylindrical format of the cavity (2.1.1) allows fluid to circulate repeatedly on its interior in a substantially circular stream cycle, hampering its exit from the cavity (2.1.1), thereby allowing further promotion of turbulent flow and higher bubble generation. Due to the clash with the protuberance (2.1), the fluid is already partly in turbulent flow. The circulation of the fluid in the cavity (2.1.1) therefore considerably raises the generation of microbubbles and nanobubbles.

The cavity (2.1.1) presents two lateral openings, each positioned at both lateral ends of the cavity (2.1.1), opposite of each other. At one or both of these lateral openings, in a preferred embodiment, is a blockage element (2.3) which impedes fluid from escaping the cavity (2.1.1) from the lateral opening where it is positioned. Given that, in a preferred embodiment, one promoter (2) is laterally positioned alongside adjacent promoters (2), the other lateral opening is blocked by the blockage element (2.3) of the adjacent promoter (2). When, in an embodiment, a promoter (2) is not laterally positioned alongside an adjacent promoter (2), both lateral openings are blocked by a blockage element (2.3). In another embodiment, only one of the lateral openings is blocked by the blockage element (2.3). In a preferred embodiment, the blockage element (2.3) has a shape that is substantially complementary with the shape of the cavity (2.1.1). This way, the fluid can only enter the cavity (2.1.1) through the central opening (2.1.3) and leave through the same central opening (2.1.3). The exit pressure will therefore be maximal in the side of the blockage element (2.3) directed towards the cavity (2.1.1), where flow perturbation and bubble generation will be higher. In another embodiment, the blockage element (2.3) has dimensions smaller than the dimensions of the lateral openings of the cavity (2.1.1), allowing for a small amount of fluid to escape from the lateral openings.

In a preferred embodiment, the distance between two adjacent promoters (2) is substantially the same as the distance between any other two adjacent promoters (2). In another embodiment, the distance between two adjacent promoters (2) is dependent on the distance between any other two adjacent promoters (2), such that both present a higher or lower distance relative to a distance between any other two adjacent promoters (2). In yet another embodiment, the distance between two adjacent promoters (2) is independent from the distance between any other two promoters (2), having substantially equal or different distances, without any specific correlation. In another embodiment, both dependencies, wherein the distance between two adjacent promoters (2) is substantially equal or metrically dependent on the distance between any other two adjacent promoters (2), and independency, wherein the distance between two adjacent promoters (2) is independent from the distance between any other two adjacent promoters (2), exist. In a preferred embodiment, the distance between two adjacent promoters (2) is such that the blockage element (2.3) of a first promotor (2) is placed on a lateral opening of the cavity (2.1.1) of a second promoter (2). Such allows the cavities (2.1.1) of the promoters (2) to be blocked on both lateral openings, obstructing the fluid stream (3) by the two lateral openings of the cavities (2.1.1).

In a preferred embodiment, the dimensions of one promoter (2) are substantially equal to the dimensions of any other promoter (2). In another embodiment, the dimensions of one promoter (2) are dependent on the dimensions of any other promoter (2). In yet another embodiment, the dimensions of one promoter (2) are independent from the dimensions of any other promoter (2), being either substantially equal or different. In another embodiment, both dependency, wherein the dimensions of one promoter (2) are substantially equal or metrically dependent on the dimensions of any other promoter (2), and independency, wherein the dimensions of one promoter (2) are independent from the dimensions of any other promoter (2), exist.

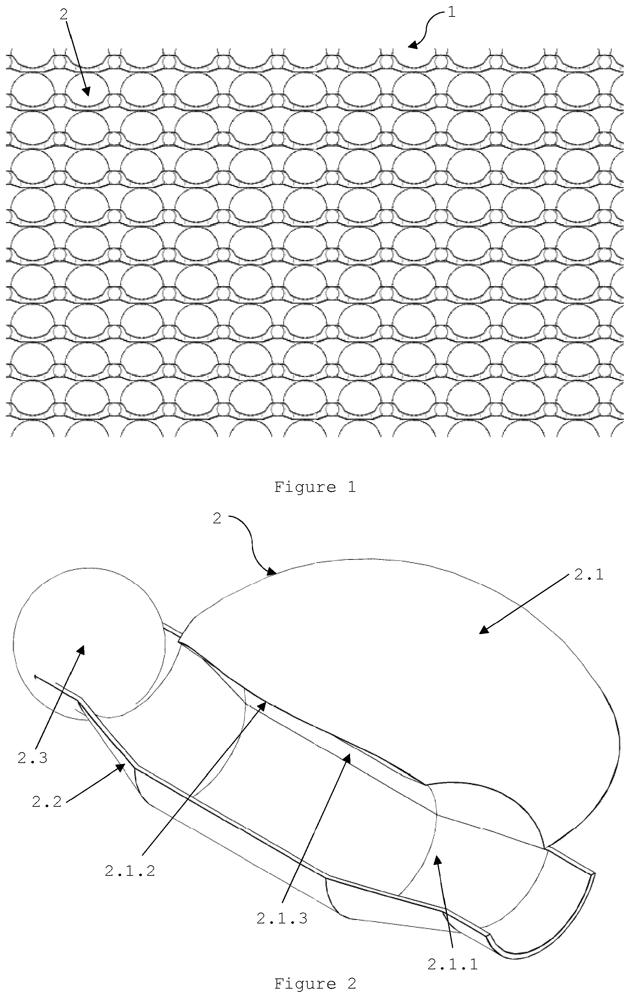

The promoters (2) are placed in a translational repetitive manner on the surface (1). Such translational repetition is achieved over the surface (1) plane, both horizontally and vertically, as observable in figure 1. This translational repetition forms on the surface (1) a two-dimensional geometrical pattern of promoters (2). This geometrical pattern will from now on be defined as being a pattern that has an indefinite number of rows of promoters (2) that are substantially horizontal and substantially parallel between each other, in relation to the plane of the surface (1).

In relation to the plane of the surface (1), in a preferred embodiment, the horizontal rows are aligned in such a way that each promoter (2) is aligned substantially vertically with the promoters (2) that are placed in the adjacent rows that are immediately above or immediately below, as can be observed in figure 1. In a second embodiment, the horizontal rows are aligned in such way that each promoter (2) is not aligned substantially vertically with the promoters (2) that are placed in the adjacent rows that are above and below. In this embodiment, each promoter (2) forms an angle with the promoters (2) that are placed in the rows immediately above and immediately below, as can be observed in figure 6. Such an angle can be any angle adequate for the effect, such as angles between 80° and 10°, preferably between 60° and 30°, more preferably between 50° and 40°, namely 45°. In this way, the alignment of promoters (2) allows the setting of a geometrical pattern, namely quadrangular or diamond shaped.

In other embodiments, the alignment between promoters (2) may or may not form a geometrical pattern. Forming a geometrical pattern, it can have a regular repetition of horizontal rows. The order in the position of the promoters (2) depends on the use of the surface (1) of the equipment of the present invention, namely on the desired aeration level that the application should achieve. The ordered disposition of promoters (2) allows higher fluid dissipation that is directly proportional to higher aeration. For a lower degree of aeration, an unordered disposition of promoters (2), including irregular distances between any two adjacent promoters (2), will dissipate the fluid with less intensity, aerating the fluid with lower intensity. The alignment between promoters (2) also depends on fluid viscosity. A fluid with higher viscosity has a smaller tendency to enter turbulent flow, requiring a higher degree of dissipation. On the contrary, a fluid with lower viscosity has a higher tendency to enter turbulent flow, so a surface (1) that presents less promoters (2) can be used, thereby saving resources on the production of the equipment of the present invention. As is known in the state of the art, solids, such as debris, present on a fluid will increase the viscosity of the fluid, which will also affect the embodiment of the present invention being used.

The dimensions of promoters (2) also affect the promoted turbulence, namely due to the presence of debris. If a fluid presents higher amounts of debris, the dimensions of the promoters (2) should preferably be smaller, to avoid excessive clashing between debris and promoters (2), therefore allowing the existence of a wider area in which fluid can enter turbulent flow. In the case of fluid with fewer debris, the dimensions of the promoters (2) can be larger, therefore optimizing the area available for fluid dissipation.

As can be observed in figure 8, the promotion of turbulent flow is initiated when the fluid stream (3) starts moving along the surface (1). As it finds the first row of promoters (2), the fluid stream (3) hits the exterior side of the protuberances (2.1), namely against the edge (2.1.2), splitting it into two streams, such that one of these streams goes down and enters the cavity (2.1.1) by the central opening (2.1.3), while the other streams engulfs the protuberance (2.1) by the upper and lateral sides, being directed to the promoters (2) that comprise the following rows of promoters (2). The stream that is sent to the cavity (2.1.1) is forced against the centre bottom of the cavity (2.1.1), which leads to a first fluid dispersion and pulverization. As a consequence, the already dispersed and pulverized fluid is further divided into two streams, each one being directly forced into each of the lateral openings of the cavity (2.1.1), thereby hitting the blockage elements (2.3), provoking a second dispersion and pulverization and forming an array of bubbles spreading in all directions. Part of the already dissipated and pulverized fluid is projected over the direction of the blockage element (2.3) standing in the opposite lateral opening, such that both projected streams clash against each other, substantially at the centre of the cavity (2.1.1), provoking a third fluid dispersion and pulverization. Each consecutive dispersion and pulverization generates more bubbles and of smaller dimensions than those formed by the previous dispersion and pulverization of fluid. After the process ends, fluid is bubbled. With fluid stream (3) continuously entering the cavity (2.1.1), new fluid pushes the bubbled fluid out of the cavity (2.1.1). The process is therefore repeated indefinitely, as long as there is fluid in circulation. The bubbled fluid, after getting out of the cavity (2.1.1), returns to the fluid stream (3) and enters the cavity (2.1.1) of another promoter (2), further intensifying the formation of bubbles.

This way, the repetition of the process intensifies formation of turbulent flow and the formation of microbubbles and nanobubbles, aerating the fluid with higher efficiency than the known solutions of the prior art.

Another part of the fluid hits the lateral walls of the protuberances (2.1), causing additional pulverization. In embodiments in which the promoters (2) are adjacent to each other, this pulverization occurs in the space between two adjacent promoters (2), which causes the pulverized fluid to clash with itself in the zone between the two promoters (2), further intensifying the formation of turbulent flow and of bubbles.

## Claims

1. Turbulent flow promoting surface comprising a surface (1) and promoters (2) , the promoters comprising:
- a protuberance (2.1) placed on the surface (1);
- a cavity (2.1.1) placed in the contact zone between the protuberance (2.1) and the surface (1) which is configured to receive a fluid circulating along the surface (1) through a central opening (2.1.3), the cavity (2.1.1) comprising two lateral openings, each positioned on the opposite lateral ends of the cavity (2.1.1),
**characterized in that**
- the promoters additionally comprise at least one lateral blockage element (2.3), and **in that**
- when the promoter (2) is laterally positioned alongside adjacent promoters (2), the cavity (2.1.1) comprises one blockage element (2.3) placed in one of the lateral openings of the cavity (2.1.1) which blocks the lateral opening of the promoter (2) that possess the blockage element (2.3); or
- when the promoter (2) is not laterally positioned alongside adjacent promoters (2) the promoter (2) comprises two blockage elements (2.3) placed in each of the lateral openings of the cavity (2.1.1) which blocks the two lateral openings of the promoter (2).

2. Surface according to the previous claim, wherein the promoters (2) further comprise an edge (2.1.2) positioned in the protuberance (2.1) and over the cavity (2.1.1).

3. Surface according to any of the previous claims, wherein the surface (1) comprises an indefinite translational repetition of promoters (2).

4. Surface according to any of the previous claims, wherein the cavity (2.1.1) comprises an inferior cut in a substantially halfpipe shape at the end of the protuberance (2.1) that is in contact with the surface (1), and a trench (2.2) that complements the substantially halfpipe shape of the inferior cut.

5. Surface according to any of the previous claims, wherein the cavity (2.1.1) has a hollow cylindrical shape and is formed by the inferior cut of the protuberance (2.1) and the trench (2.2).

6. Surface according to any of the previous claims, wherein the promoters (2) comprise a circular cut done on the protuberance (2.1) that is directly above the inferior cut, in such a way that it forms the edge (2.1.2) and the central opening (2.1.3).

7. Surface according to any of the previous claims, wherein the blockage element (2.3) has a shape substantially complementary to the shape of the cavity (2.1.1).

8. Surface according to any of the previous claims, wherein the distance between two adjacent promoters (2) is substantially equal to the distance between any two adjacent promoters (2).

9. Surface according to any of the previous claims, wherein the protuberance (2.1) has a shape selected from substantially hemispherical, substantially pyramidal, substantially parallelepiped, substantially prismatic, substantially conical, substantially frustum shaped, or substantially frustoconical, preferentially a substantially hemispherical shape and the trench (2.2) has a shape selected from substantially halfpipe, substantially parallelepiped, substantially prismatic, substantially conical, substantially frustum shaped, or substantially frustoconical, preferentially a substantially halfpipe shape.

10. Surface according to any of the previous claims, wherein the translational repetition of promoters (2) forms a two-dimensional geometrical pattern on the surface (1) that comprises an indefinite number of horizontal rows of promoters (2).

11. Surface according to the previous claim, wherein the horizontal rows of promoters (2) are aligned in such a way that each promoter (2) is aligned substantially vertically with the promoters (2) that are placed over adjacent rows, immediately above and immediately below.

12. Surface according to claim 11, wherein the horizontal rows of promoters (2) are aligned in such a way that each promoter (2) makes an angle comprised between 10° and 80° with the promoters (2) that are placed over adjacent rows, immediately above and immediately below.

13. Surface according to any of the previous claims, wherein the dimensions of one promoter (2) are dependent on the dimensions of any other promoter (2), preferentially the dimensions of one promoter (2) are equal to the dimensions of any other promoter (2).

14. Turbulent flow promotion method performed by the surface claimed in any of claims 1 to 13, **characterized by** comprising the following stages:
a) the fluid stream (3) starts flowing along the surface (1);
b) the fluid stream (3) when meets the first row of promoters (2) hits the protuberances (2.1) of the promoters (2), namely on the edge (2.1.2);
c) the fluid stream (3) is split into two streams upon hitting the edge (2.1.2), with one of these streams engulfing the protuberance (2.1) along the upper and lateral sides and the other stream entering the cavity (2.1.1) through the central opening (2.1.3);
d) the stream that enters the cavity (2.1.1) hits the central bottom of the cavity (2.1.1) directly, being dispersed and pulverized a first time;
e) the stream is further split into two streams, being each stream forcibly directed to each of the lateral openings of the cavity (2.1.1);
f) the streams hit the blockage elements (2.3) and are dispersed and pulverized a second time;
g) part of the streams referred in the prior stage are projected in the direction of the blockage element (2.3) placed at the opposite lateral opening of the cavity (2.1.1);
h) the referred streams of the prior stage hit each other substantially at the centre of the cavity (2.1.1), dispersing and pulverizing a third time;
i) the fluid is considered bubbled;
j) the bubbled fluid referred in the prior stage clashes with fluid stream (3) that is entering the cavity (2.1.1);
k) the bubbled fluid leaves the cavity (2.1.1), being changed by fluid that was in the main fluid stream (3);
l) the process returns to stage a) while there is fluid circulating;
further wherein steps a) to l) occur in substantially every promoter (2) placed on the surface (1) with fluid or with bubbled fluid.

15. Use of the surface claimed in any of claims 1 to 13 in fluid aeration.

## Patentansprüche

1. Oberfläche zur Förderung einer turbulenten Strömung, umfassend eine Oberfläche (1) und Promotoren (2), wobei die Promotoren Folgendes umfassen:
- eine Protuberanz (2.1), die auf der Oberfläche (1) angeordnet ist;
- einen Hohlraum (2.1.1), der in der Kontaktzone zwischen der Protuberanz (2.1) und der Oberfläche (1) angeordnet ist, der dazu ausgebildet ist, ein entlang der Oberfläche (1) zirkulierendes Fluid durch eine zentrale Öffnung (2.1.3) aufzunehmen, wobei der Hohlraum (2.1.1) zwei laterale Öffnungen umfasst, die jeweils an den gegenüberliegenden lateralen Enden des Hohlraums (2.1.1) positioniert sind,
**dadurch gekennzeichnet, dass**
- die Promotoren (2) zusätzlich mindestens ein laterales Blockierelement (2.3) umfassen, und dass
- wenn der Promotor (2) lateral neben benachbarten Promotoren (2) positioniert ist, der Hohlraum (2.1.1) ein Blockierelement (2.3) umfasst, das in einer der lateralen Öffnungen des Hohlraums (2.1.1) angeordnet ist, welches die laterale Öffnung jenes Promotors (2) blockiert, der das Blockierelement (2.3) aufweist; oder
- wenn der Promotor (2) nicht lateral neben benachbarten Promotoren (2) positioniert ist, der Promotor (2) zwei Blockierelemente (2.3) umfasst, die in jeder der lateralen Öffnungen des Hohlraums (2.1.1) angeordnet sind und die beiden lateralen Öffnungen des Promotors (2) blockieren.

2. Oberfläche nach dem vorhergehenden Anspruch, wobei die Promotoren (2) ferner eine Kante (2.1.2) umfassen, die in der Protuberanz (2.1) und über dem Hohlraum (2.1.1) positioniert ist.

3. Oberfläche nach einem der vorhergehenden Ansprüche, wobei die Oberfläche (1) eine periodische, translatorische Anordnung von Promotoren (2) umfasst.

4. Oberfläche nach einem der vorhergehenden Ansprüche, wobei der Hohlraum (2.1.1) einen unteren Ausschnitt in im Wesentlichen halbröhrenförmiger Gestalt an dem Ende der Protuberanz (2.1) umfasst, das mit der Oberfläche (1) in Kontakt steht, und eine Nut (2.2), die im Wesentlichen mit der halbröhrenförmige Gestalt des unteren Ausschnitts komplementär ist.

5. Oberfläche nach einem der vorhergehenden Ansprüche, wobei der Hohlraum (2.1.1) eine hohlzylindrische Form aufweist und durch den unteren Ausschnitt der Protuberanz (2.1) und die Nut (2.2) gebildet wird.

6. Oberfläche nach einem der vorhergehenden Ansprüche, wobei die Promotoren (2) einen kreisförmigen Ausschnitt an der Protuberanz (2.1) unmittelbar über dem unteren Ausschnitt umfassen, derart, dass er die Kante (2.1.2) und die zentrale Öffnung (2.1.3) bildet.

7. Oberfläche nach einem der vorhergehenden Ansprüche, wobei das Blockierelement (2.3) eine Form aufweist, die im Wesentlichen komplementär zur Form des Hohlraums (2.1.1) ist.

8. Oberfläche nach einem der vorhergehenden Ansprüche, wobei der Abstand zwischen zwei benachbarten Promotoren (2) im Wesentlichen gleich dem Abstand zwischen zwei beliebigen benachbarten Promotoren (2) ist.

9. Oberfläche nach einem der vorhergehenden Ansprüche, wobei die Protuberanz (2.1) eine aus der Gruppe bestehende Form aufweist: im Wesentlichen halbkugelförmig, im Wesentlichen pyramidenförmig, im Wesentlichen parallelepipedförmig, im Wesentlichen prismatisch, im Wesentlichen konisch, im Wesentlichen stumpfförmig oder im Wesentlichen kegelstumpfförmig, vorzugsweise im Wesentlichen halbkugelförmig, und wobei die Nut (2.2) eine aus der Gruppe bestehende Form aufweist: im Wesentlichen halbröhrenförmig, im Wesentlichen parallelepipedförmig, im Wesentlichen prismatisch, im Wesentlichen konisch, im Wesentlichen stumpfförmig oder im Wesentlichen kegelstumpfförmig, vorzugsweise im Wesentlichen halbröhrenförmig.

10. Oberfläche nach einem der vorhergehenden Ansprüche, wobei die translatorische Wiederholung von Promotoren (2) ein zweidimensionales geometrisches Muster auf der Oberfläche (1) bildet, das eine unbegrenzte Anzahl von horizontalen Reihen von Promotoren (2) umfasst.

11. Oberfläche nach dem vorhergehenden Anspruch, wobei die horizontalen Reihen von Promotoren (2) derart ausgerichtet sind, dass jeder Promotor (2) im Wesentlichen vertikal mit den Promotoren (2) ausgerichtet ist, die auf benachbarten Reihen unmittelbar darüber und unmittelbar darunter angeordnet sind.

12. Oberfläche nach Anspruch 11, wobei die horizontalen Reihen von Promotoren (2) derart ausgerichtet sind, dass jeder Promotor (2) einen Winkel zwischen 10° und 80° mit den Promotoren (2) bildet, die auf benachbarten Reihen unmittelbar darüber und unmittelbar darunter angeordnet sind.

13. Oberfläche nach einem der vorhergehenden Ansprüche, wobei die Abmessungen eines Promotors (2) von den Abmessungen eines beliebigen anderen Promotors (2) abhängen. Vorzugsweise entsprechen die Abmessungen eines Promotors (2) den Abmessungen eines beliebigen anderen Promotors (2).

14. Verfahren zur Förderung einer turbulenten Strömung, das durch die in einem der Ansprüche 1 bis 13 beanspruchte Oberfläche durchgeführt wird, **dadurch gekennzeichnet, dass** es die folgenden Stufen umfasst:
a) der Fluidstrom (3) beginnt, entlang der Oberfläche (1) zu strömen;
b) der Fluidstrom (3) trifft, wenn er auf die erste Reihe von Promotoren (2) trifft, auf die Protuberanzen (2.1) der Promotoren (2), nämlich auf die Kante (2.1.2);
c) der Fluidstrom (3) wird beim Auftreffen auf die Kante (2.1.2) in zwei Ströme aufgeteilt, wobei einer dieser Ströme die Protuberanz (2.1) entlang der oberen und lateralen Seiten umströmt und der andere Strom durch die zentrale Öffnung (2.1.3) in den Hohlraum (2.1.1) eintritt;
d) der Strom, der in den Hohlraum (2.1.1) eintritt, trifft direkt auf den zentralen Boden des Hohlraums (2.1.1) auf, wobei er ein erstes Mal dispergiert und pulverisiert wird;
e) der Strom wird weiter in zwei Ströme aufgeteilt, wobei jeder Strom zwangsweise zu jeweils einer der lateralen Öffnungen des Hohlraums (2.1.1) geleitet wird;
f) die Ströme treffen auf die Blockierelemente (2.3) und werden ein zweites Mal dispergiert und pulverisiert;
g) ein Teil der in der vorhergehenden Stufe genannten Ströme wird in Richtung des Blockierelements (2.3) geleitet, das an der gegenüberliegenden lateralen Öffnung des Hohlraums (2.1.1) angeordnet ist;
h) die genannten Ströme der vorhergehenden Stufe treffen im Wesentlichen in der Mitte des Hohlraums (2.1.1) aufeinander, wobei sie dabei ein drittes Mal dispergiert und pulverisiert werden;
i) das Fluid wird als begast betrachtet;
j) das in der vorhergehenden Stufe genannte begaste Fluid mischt sich mit dem Fluidstrom (3), der in den Hohlraum (2.1.1) eintritt;
k) das begaste Fluid verlässt den Hohlraum (2.1.1), wobei es durch Fluid ersetzt wird, das sich im Hauptfluidstrom (3) befand;
l) der Prozess kehrt zur Stufe a) zurück, solange Fluid zirkuliert;
wobei ferner die Schritte a) bis l) in im Wesentlichen jedem Promotor (2) ablaufen, der auf der Oberfläche (1) mit Fluid oder mit begastem Fluid angeordnet ist.

15. Verwendung der Oberfläche nach einem der Ansprüche 1 bis 13 bei der Fluidbelüftung.

## Revendications

1. Surface favorisant un écoulement turbulent, comprenant une surface (1) et des promoteurs (2), les promoteurs comprenant:
- une protubérance (2.1) située sur la surface (1);
- une cavité (2.1.1) située dans la zone de contact entre la protubérance (2.1) et la surface (1), qui est configurée pour recevoir un fluide circulant le long de la surface (1) à travers une ouverture centrale (2.1.3), la cavité (2.1.1) comprenant deux ouvertures latérales, chacune positionnée sur les extrémités latérales opposées de la cavité (2.1.1),
**caractérisée en ce que**
- les promoteurs (2) comprennent également au moins un élément de blocage latéral (2.3), et **en ce que**
- lorsque le promoteur (2) est positionné latéralement à côté des promoteurs (2) attenants, la cavité (2.1.1) comprend un élément de blocage latéral (2.3) situé dans l'une des ouvertures latérales de la cavité (2.1.1), qui bloque l'ouverture latérale du promoteur (2) disposant de l'élément de blocage (2.3) ; où
- lorsque le promoteur (2) n'est pas positionné latéralement à côté des promoteurs (2) attenants, le promoteur (2.1.1) comprend deux éléments de blocage (2.3) situés dans l'une des ouvertures latérales de la cavité (2.1.1), qui bloque les deux ouvertures latérales du promoteur (2).

2. Surface selon la revendication précédente, dans laquelle les promoteurs (2) comprennent en outre une bordure (2.1.2) positionnée dans la protubérance (2.1) et au-dessus de la cavité (2.1.1).

3. Surface selon l'une des revendications précédentes, dans laquelle la surface (1) comprend une répétition translationnelle indéterminée de promoteurs (2).

4. Surface selon l'une des revendications précédentes, dans laquelle la cavité (2.1.1) comprend une coupe inférieure en forme sensiblement de demi-lune à l'extrémité de la protubérance (2.1) qui est en contact avec la surface (1), et un sillon (2.2) qui complète la forme sensiblement de demi-lune de la coupe inférieure.

5. Surface selon l'une des revendications précédentes, dans laquelle la cavité (2.1.1) présente une forme de cylindre creux et est formée par la coupe inférieure de la protubérance (2.1) et le sillon (2.2).

6. Surface selon l'une des revendications précédentes, dans laquelle les promoteurs (2) comprennent une coupe circulaire formée sur la protubérance (2.1) qui se trouve directement au-dessus de la coupe inférieure, de telle sorte qu'elle constitue la bordure (2.1.2) et l'ouverture centrale (2.1.3).

7. Surface selon l'une des revendications précédentes, dans laquelle l'élément de blocage (2.3) a une forme sensiblement complémentaire à celle de la cavité (2.1.1).

8. Surface selon l'une des revendications précédentes, dans laquelle la distance entre les deux promoteurs (2) attenants est sensiblement égale à celle entre deux promoteurs (2) attenants quels qu'ils soient.

9. Surface selon l'une des revendications précédentes, dans laquelle la protubérance (2.1) a une forme sélectionnée parmi la forme sensiblement hémisphérique, sensiblement pyramidale, sensiblement parallélépipédique, sensiblement prismatique, sensiblement conique, sensiblement de tronc de cône, ou sensiblement tronconique, de préférence une forme sensiblement hémisphérique, et le sillon (2.2) a une forme sélectionnée parmi la forme sensiblement de demi-lune, sensiblement parallélépipédique, sensiblement prismatique, sensiblement conique, sensiblement de tronc de cône, ou sensiblement tronconique, de préférence une forme sensiblement de demi-lune.

10. Surface selon l'une des revendications précédentes, dans laquelle la répétition translationnelle des promoteurs (2) forme une structure géométrique bidimensionnelle sur la surface (1), qui comprend un nombre indéterminé de rangées horizontales de promoteurs (2).

11. Surface selon la revendication précédente, dans laquelle les rangées horizontales de promoteurs (2) sont orientées de telle sorte que chaque promoteur (2) est aligné sensiblement verticalement avec les promoteurs (2) qui sont placés au-dessus des rangées adjacentes, immédiatement au-dessus et immédiatement au-dessous.

12. Surface selon la revendication 11, dans laquelle les rangées horizontales des promoteurs (2) sont orientées de telle sorte que chaque promoteur (2) forme un angle compris entre 10° et 80° avec les promoteurs (2) qui sont placés au-dessus des rangées adjacentes, immédiatement au-dessus et immédiatement au-dessous.

13. Surface selon l'une des revendications précédentes, dans laquelle les dimensions d'un promoteur (2) dépendent des dimensions de n'importe quel autre promoteur (2), de préférence les dimensions d'un promoteur (2) sont égales aux dimensions de n'importe quel autre promoteur (2).

14. Méthode de promotion d'écoulement turbulent réalisée par la surface revendiquée dans l'une des revendications 1 à 13, **caractérisée en ce qu'**elle comprend les étapes suivantes:
a) l'écoulement de fluide (3) commence à se produire le long de la surface (1);
b) l'écoulement de fluide (3), au moment d'atteindre la première rangée de promoteurs (2), percute les protubérances (2.1) des promoteurs (2), notamment sur la bordure (2.1.2);
c) l'écoulement de fluide (3) se divise en deux écoulements lorsqu'il percute la bordure (2.1.2), avec l'un de ces écoulements submergeant la protubérance (2.1) le long des parties supérieures et latérales, et l'autre écoulement pénétrant dans la cavité (2.1.1) par l'ouverture centrale (2.1.3) ;
d) l'écoulement qui pénètre dans la cavité (2.1.1) percute la base centrale de la cavité (2.1.1) directement, en étant dispersé et pulvérisé une première fois;
e) l'écoulement se divise en outre en deux écoulements, chaque écoulement étant dirigé obligatoirement vers chacune des ouvertures latérales de la cavité (2.1.1);
f) les écoulements percutent les éléments de blocage (2.3) et sont dispersés et pulvérisés une deuxième fois;
g) une partie des écoulements mentionnés à l'étape antérieure sont projetés dans la direction de l'élément de blocage (2.3) situé sur l'ouverture latérale opposée de la cavité (2.1.1);
h) les écoulements mentionnés de l'étape antérieure se percutent fortement au centre de la cavité (2.1.1), tout en étant dispersés et pulvérisés une troisième fois;
i) le fluide est considéré comme moussant;
j) le fluide moussant mentionné à l'étape antérieure se heurte à l'écoulement de fluide (3) qui pénètre dans la cavité (2.1.1);
k) le fluide moussant quitte la cavité (2.1.1) en étant chargé du fluide qui se trouvait dans l'écoulement de fluide principal (3);
l) le processus reprend à l'étape a) aussi longtemps que le fluide circule;
en outre, dans lequel les étapes a) à l) se déroulent dans sensiblement chaque promoteur (2) situé sur la surface (1) avec un fluide ou un fluide moussant.

15. Utilisation de la surface revendiquée dans l'une des revendications 1 à 13 dans l'aération de fluide.
